# EUROPEAN PATENT SPECIFICATION

(11) **EP 4 002 133 B1**
(45) Date of publication and mention of the grant of the patent: **20.03.2024**
(21) Application number: 21196814.4
(22) Date of filing: 15.09.2021
(51) Int. Cl.: G06F 13/16, G06F 13/42, H04L 12/40, G06F 1/3234, H04L 47/10, H04L 47/30, G06F 13/40, G06F 1/3225

(54) **PERFORMING SAVE STATE SWITCHING IN SELECTIVE LANES BETWEEN ELECTRONIC DEVICES IN UFS SYSTEM**
DURCHFÜHRUNG EINER SICHEREN ZUSTANDSUMSCHALTUNG IN SELEKTIVEN SPUREN ZWISCHEN ELEKTRONISCHEN VORRICHTUNGEN IN EINEM UFS-SYSTEM
RÉALISATION DE COMMUTATION D'ÉTAT DE SAUVEGARDE DANS DES VOIES SÉLECTIVES ENTRE DES DISPOSITIFS ÉLECTRONIQUES DANS UN SYSTÈME UFS

(30) Priority: 20.11.2020 IN 202041050543; 16.07.2021 IN 202041050543
(43) Date of publication of application: 25.05.2022
(73) Proprietor: Samsung Electronics Co., Ltd., Suwon-si, Gyeonggi-do 16677 (KR)
(72) Inventor: PRAFULKUMAR, Abhani Dipakkumar, 362001 Gujarat (IN); GARG, Shubham, 110086 Delhi (IN); KANNAMPUZHA, Ken Joseph, 683587 Kerala (IN)
(74) Representative: Kuhnen & Wacker Patent- und Rechtsanwaltsbüro PartG mbB

(56) References cited:
- US-A1- 2014 244 904
- US-A1- 2017 222 686
- US-A1- 2020 341 825

## Description

### FIELD OF INVENTION

The present disclosure relates to a Universal Flash Storage (UFS) system, and more specifically related to a method and a UFS system for performing save state switching using selective lanes between a first electronic device and a second electronic device in the UFS system. The present application is based on, and claims priority from an Indian Application Number 202041050543 filed on 20th November 2020**.**

### BACKGROUND

In general, Joint Electron Device Engineering Council (JEDEC) Universal Flash Storage (UFS) is specifically tailored for mobile applications and computing systems requiring high performance and low energy consumption. The JEDEC UFS leverages industry leading specifications MIPI M-PHY^{®} v4.1 physical layer specification and a MIPI UniPro^{®} v1.8 transport layer from a MIPI^{®} Alliance to form an interconnect layer in the UFS system.

US 2014/244904A1 discloses a memory device including a non-volatile storage device from which data is read and to which data is written, an interface that is connected to the host device by a multiple upstream lanes and/or a multiple downstream lanes and performs data communication in both directions with the host device, and a memory controller. The memory controller changes a connection state of each lane on the basis of lane settings which are determined on the basis of at least one of an amount of data transmitted and the sequentiality of data when the data is transmitted between the memory device and the host device.

US 2020/341825 A1 discloses a method for managing communication between a Universal Flash Storage (UFS) device and a UFS host includes determining at least one path of payload data flow along at least one of a transmission lane of the UFS host and a transmission lane of the UFS device. Based on the determined at least one path of the payload data flow, the method includes initiating, by operating at least one of the UFS host and the UFS device, at least one Hibernate state entry action. Further, the method includes initiating, by operating the at least one of the UFS host and the UFS device, at least one Hibernate state exit action after completion of transfer of a pre-determined number of data frames of the payload data between the UFS host and the UFS device.

US 2017/222686 A1 discloses Serial communication using a packetization protocol engineered for efficient transmission. Data link layer (DLL) control packets can be generated for transmission of control messages. Each DLL control message packet can have a DLL control packet length, and the DLL control packet length can be a fixed length. Physical layer (PHY) control packets can be generated. Each PHY control packet can include one of the DLL control packets and a control token. The length of each PHY control packet can be the sum of the DLL control packet length and a control token length of the control token. The PHY control packets can be encapsulated in frames. Each of the frames can include a synchronization symbol having a symbol length. The length of each frame can be the sum of the symbol length and an encapsulation length, which can be twice the length of the PHY control packet.

In the UFS system, commands (e.g., read command, write command or the like) are initiated by one end of a link (e.g., dp-dn differential signaling) referred to as an initiator device and other end works as a slave and process the commands, referred to as a target device. In order to achieve balance between energy consumption and throughput, the UFS system offers multiple speed versus power settings with adjustable number of lanes. For an example, a speed mode regulates speed of a data frame at the initiator device (100) and the target device (200). The speed mode can be, for example, but not limited to a fast mode, a fast auto mode, a PWM G1 mode, a HSG1 mode, a HSG2 mode, a HSG3 mode, and a HSG4 mode. In an example, in the HSG1 mode, speed of the data frame transmission is 1248 Mbps. In another example, in the HSG2 mode, speed of the data frame transmission is 2496 Mbps. Further, a configuration for the multiple speeds or the power setting is predominantly decided by the initiator device. During different read operations and data write requests where majority of data transfer is expected in a single direction, there are some provisions in the UFS system to save power on an opposite side of the lane without compromising an overall throughput of the UFS system.

In case of the read operation, the target device receive data request and wait for an application layer to provide required data to send back to the initiator device. The wait time is called latency of the initiator device and is unknown to the initiator device. During the wait time, both the initiator device and the target device side remain an idle mode and dissipate power at the initiator device and the target device. Once the data is available to send from the target device, only small bandwidth is required from the initiator device to send acknowledgement for the received data and thus majority of the bandwidth and power is wasted both at the initiator device and the target device.

In case of the data write request, the target device sends a back UFS specific ready to transfer a UFS protocol information unit (UPIU). After receiving a round turn-around time (RTT) UPIU, the initiator device starts and transfers the write data and again only small bandwidth is required from the target device to send acknowledgement of the transferred data.

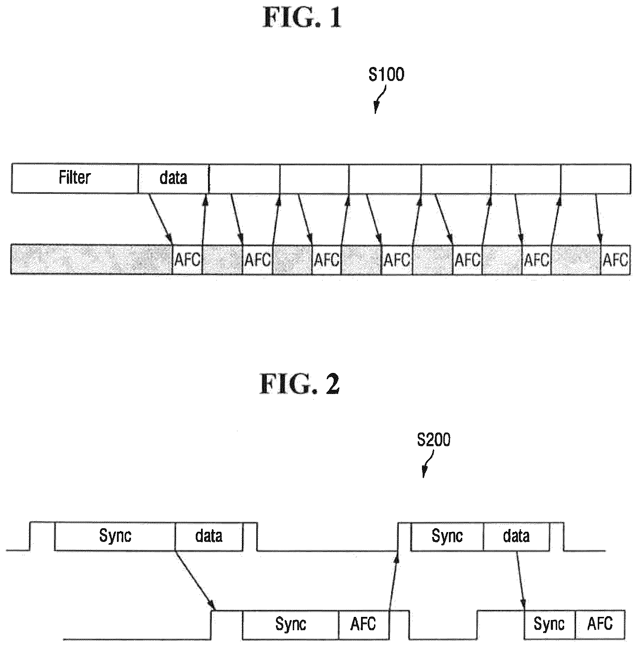

FIG. 1 is a signal timing diagram (S100) illustrating performance impact in the fast mode, according to the prior art. Referring to FIG. 1, in order to deal with speed-power trade-off, the UFS system offers many speed modes. In the fast mode, all lanes are always active irrespective of data transfer requirement. Whenever there is any data to send, there is no latency as all lanes are always active but fast mode is not much optimized in terms of power and fast mode consumes more power.

FIG. 2 is a signal timing diagram (S200) illustrating performance impact in the fast auto mode, according to the prior art. Referring to the FIG. 2, in the fast auto mode, when there is no data to send all lanes can go to save state for power saving. There is significant latency of prepare length and synchronize length time in transitioning between save and active states. If the initiator device or the target device operates in auto-mode and close all the active lanes when line is idle, an Acknowledgement-and-FlowControl (AFC) reaches late to the initiator device, which impacts overall throughput of the UFS system. Thus, the fast auto mode is more optimized in terms of power but throughput is compromised.

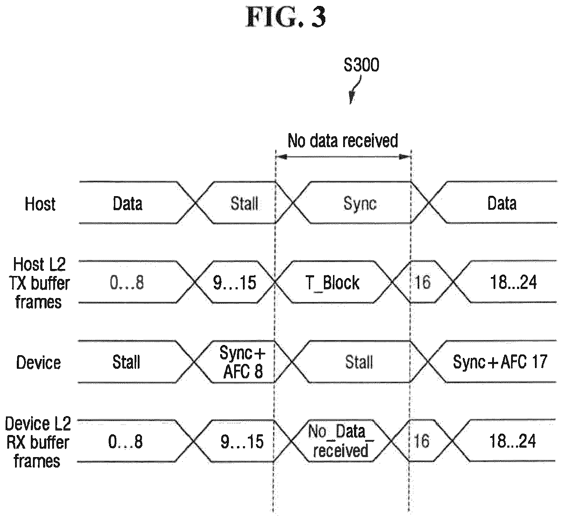

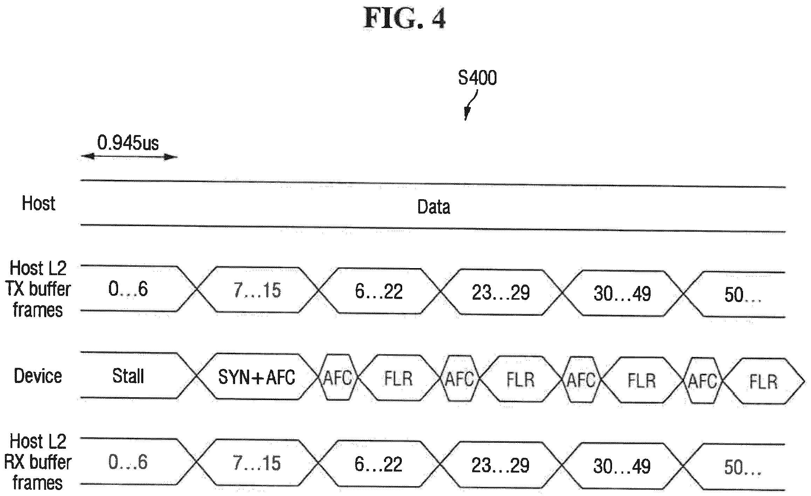

FIGS. 3 and 4 are signal timing diagrams illustrating conventional scenario of initiator TX block, according to the prior art.

As per standard specification, device can send outstanding 16 frames without receiving AFC from the host side. After sending 16 outstanding frames, host is be blocked for data transfer. As illustrate in FIG. 3, in this example, as group ACK is 9 so device rx receives 9 frames first and then only it starts sending AFC for the received data. After receiving 9 frames, device tx is initiating burst to send AFC for first 9 frames. However, since the device tx is currently in save state (auto mode), so there is a latency of prepare plus sync length in sending AFC for first 9 frames. This time is greater than time required by host to send remaining 7 frames (16-9). After sending all 16 frames, host is be blocked for data transfer as it has still not received any AFC yet.

Now since host is blocked for data transfer, it moves to save state. After some time, the AFC reaches to host end, so the host again have to move to burst state and latency of prepare plus sync is added.

For device side, after sending AFC for 9 frames, it receives next 7 frames then do not receive anything for some time since host is blocked during that time. So the device tx also switches to save state.

Above process is repeated and due to continuous save-burst state switching, throughput for data transfer is reduced.

Reverting now to FIG. 4, in this example, group ACK is 7, so device starts sending AFC after receiving 7 frames. Since time to send remaining 9 frames (16-7) is greater than save to burst state transition latency(prepare plus sync), so host always receive AFC before sending all 16 outstanding frames and thus never blocked for data transfer, so no extra latency for repeated redundant save-burst state transitions as observed in above case. However, due to this, burst is always open in all the lanes at host as well as device end. So there is no power saving.

Further, referring to the FIG. 3 and FIG.4, consider a conventional methods and systems, the data transmission might be blocked because L2 flow control Credits/AFCs are not sent back quickly enough. Below are the use cases -
- Case-1: If Group ACK is >7, device will transition to STALL after sending Credits/ACKs and host will be blocked repeatedly for data transmission as shown above which will impact performance.
- Case-2: Optimum value of Group ACK <=7 but in this case device burst will remain open if host is continuously sending data.

L2 buffer calculations are as follows -

### Configuration:

• Gear - HSG4 Series-A
o Number of Active Lane - 2
o Sync Length - 1024 bytes

| **Title** | **Value** |
|---|---|
| **Frame Size (in Bytes)** | 272 |
| **Max Outstanding Frames** | 16 |
| **Time per Frame** | 0.135us |
| **Time all Frames** | 2.17 us |
| **SYNC Time** | 1.14us |
| **Min STALL Time** | 0.36us |

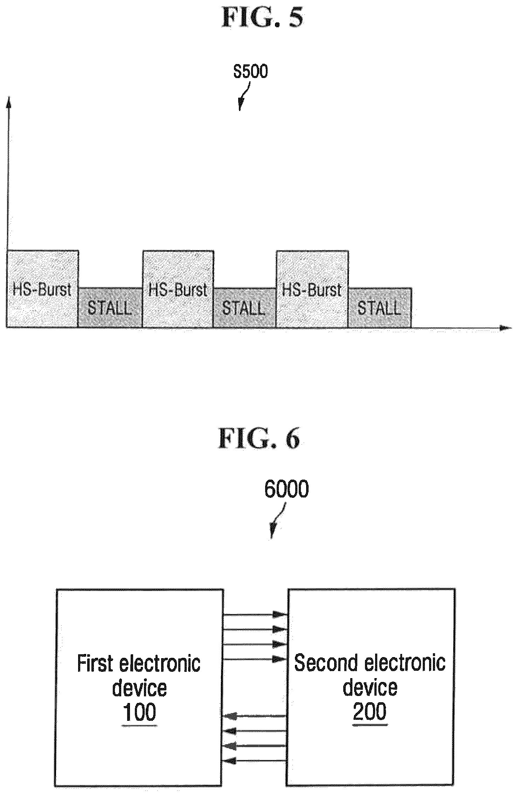

FIG. 5 is a graph illustrating burst and save state power, according to the prior art.

The FIG. 5 shows the power and latency tradeoff between burst and save state. Horizontal axis is time whereas vertical axis is power consumption. Burst state consumes more power, so to save power when there is no data to send mphy switches to save state but there is a latency in switching from save state to burst state again.

Thus, there is a need for a method and a UFS system for performing save state switching using selective lanes between the initiator device and the target device in the UFS system.

### OBJECT OF INVENTION

The principal object of the embodiments herein is to provide a method and a UFS system for performing save state switching using selective lanes between a first electronic device and a second electronic device in the UFS system. When there is no data from local application layer of the first electronic device, then only we switch all lanes except lane-0 to save state. It is irrespective of data received by peer device.

Thus, the UFS system is more optimized in terms of power.

In the proposed method, when there is data from local application layer of the electronic device (initiator or target device), then the electronic device configures the plurality of lanes between the first electronic device and the second electronic device in an active state to achieve maximum throughput from the first electronic device. Thus, the UFS system is more optimized in terms of throughput.

### SUMMARY

Accordingly, the embodiment herein is to provide a method for performing save state switching using selective lanes between a first electronic device and a second electronic device in an UFS system. The method includes detecting whether data request is received from an application layer of the first electronic device. In response to determining that the data request is not received from the application layer of the first electronic device, the method includes configuring a first lane from a plurality of lanes between the first electronic device and the second electronic device in an active state and remaining lanes from the plurality of lanes in a power save mode for regulating power of the first electronic device, and transmitting credit information corresponding to the data to the second electronic device using the first link. In response to determining that the data request is received from the application layer of the first electronic device, the method includes configuring the plurality of lanes between the first electronic device and the second electronic device in an active state to achieve maximum throughput from the first electronic device, and transmitting the data from the first electronic device to the second electronic device using at least one lane from the plurality of links.

In an embodiment, the data request received from the application layer of the first electronic device indicates one of a data read request and a data write request at the first electronic device.

In an embodiment, the first electronic device is an initiator device and the second electronic device is a target device.

In an embodiment, the first electronic device is a target device and the second electronic device is an initiator device.

Accordingly, the embodiment herein is to provide an UFS system for performing save state switching using selective links. The UFS system includes a first electronic device, and a second electronic device communicatively coupled to the first electronic device using a plurality of links. The first electronic device includes an UFS memory configured to support one or more power save modes. A lane controller configured to detect whether data request is received from an application layer of the first electronic device. In response to determining that the data request is not received from the application layer of the first electronic device, the lane controller configures a first lane from the plurality of lanes between the first electronic device and the second electronic device in an active state and remaining lanes from the plurality of lanes in a power save mode for regulating power of the first electronic device, and transmit credit information corresponding to the data to the second electronic device using the first link. In response to determining that the data request is received from the application layer of the first electronic device, the lane controller configures the plurality of lanes between the first electronic device and the second electronic device in an active state to achieve maximum throughput from the first electronic device, and transmit the data from the first electronic device to the second electronic device using at least one lane from the plurality of links.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. The invention is set out in the independent claims. Preferred embodiments are defined by the dependent claims.

### BRIEF DESCRIPTION OF FIGURES

The method and UFS system are illustrated in the accompanying drawings, throughout which like reference letters indicate corresponding parts in the various figures. The embodiments herein will be better understood from the following description with reference to the drawings, in which:
FIG. 1 is a signal timing diagram illustrating performance impact in a fast mode, according to the prior art;
FIG. 2 is a signal timing diagram illustrating performance impact in a fast auto mode, according to the prior art;
FIGS. 3 and 4 are signal timing diagrams illustrating conventional scenario of initiator TX block, according to the prior art;
FIG. 5 is a graph illustrating burst and save state power, according to the prior art;
FIG. 6 illustrates a proposed UFS system, according to the embodiments as disclosed herein;
FIG. 7a shows various hardware components of an initiator device, according to an embodiment as disclosed herein;
FIG. 7b shows various hardware components of a target device, according to an embodiment as disclosed herein;
FIG. 8 illustrating data flow in the UFS system with a save state switching in selective lanes, when the target device is in an idle mode, according to the embodiments as disclosed herein;
FIG. 9 illustrating data flow in the UFS system with the save state switching in selective lanes, when the initiator device is an idle mode, according to the embodiments as disclosed herein;
FIG. 10 is a flow chart illustrating a method for performing save state switching using selective lanes between a first electronic device and a second electronic device in the UFS system, according to the embodiments as disclosed herein;
FIG. 11 is an example flow chart illustrating various operations for performing save state switching using selective lanes between a first electronic device and a second electronic device in the UFS system, according to the embodiments as disclosed herein;
FIG. 12 illustrates energy consumption difference with respect to fast, fast auto mode and proposed scheme for write case, according to the embodiments as disclosed herein;
FIG. 13 illustrates energy consumption difference with respect to fast, fast auto mode and proposed scheme for read case, according to the embodiments as disclosed herein; and
FIG. 14 illustrates multiple read/data write request calculations of UFS system, according to the embodiments as disclosed herein.

### DETAILED DESCRIPTION OF INVENTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware and software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

Accordingly the embodiment herein is to provide a method and UFS system for performing save state switching using selective lanes between a first electronic device and a second electronic device in the UFS system. The method includes detecting, by the first electronic device, whether data request is received from an application layer of the first electronic device. In response to determining that the data request is not received from application layer of the first electronic device, the method includes configuring a first lane from a plurality of lanes between the first electronic device and the second electronic device in an active state and remaining lanes from the plurality of lanes in a power save mode for regulating power of the first electronic device, and transmitting one of an AFC frame and credit information corresponding to the data to the second electronic device using the first link. In response to determining that the data request is received from the application layer of the first electronic device, the method includes configuring the plurality of lanes between the first electronic device and the second electronic device in an active state to achieve maximum throughput from the first electronic device, and transmitting the data from the first electronic device to the second electronic device using at least one lane from the plurality of links.

In the proposed method, the first electronic device determines whether the data request is received from the application layer of the first electronic device. If the data request is not received from application layer of the first electronic device then, the first electronic device configures the first lane from the plurality of lanes between the first electronic device and the second electronic device in the active state and remaining lanes from the plurality of lanes in the power save mode for regulating power of the first electronic device. Thus, the UFS system is more optimized in terms of power.

In the proposed method, if the data request is received from the application layer of the first electronic device then, the first electronic device configures the plurality of lanes between the first electronic device and the second electronic device in an active state to achieve maximum throughput from the first electronic device. Thus, the UFS system is more optimized in terms of throughput.

Referring now to the drawings and more particularly to FIGS. 5 through 14, where similar reference characters denote corresponding features consistently throughout the figures, there are shown preferred embodiments.

FIG. 5 illustrates a proposed UFS system (6000), according to the embodiments as disclosed herein. The UFS system (6000) includes a first electronic device (100) and a second electronic device (200). The UFS system (6000) can be a Flash memory system defined by the Joint Electron Device Engineering Council (JEDEC) standard, designed for high data transfer speed and low energy consumption. In an embodiment, the first electronic device (100) is an initiator device and the second electronic device (200) is a target device. In another embodiment, the first electronic device (100) is the target device and the second electronic device (200) is the initiator device.

The initiator device and the target device can be a flash storage device. Examples of the initiator device and the target device can be, but is not limited to, smart phone, laptop computer, tablet, flexible device, an internet of things (IoT) device, etc. The initiator device and the target device may be an embedded device within the electronic device or may be integrated on a removable card, for flexible use with different electronic devices.

The first electronic device (100) detects whether data request is received from a local application layer of the first electronic device (100). In an embodiment, the data request received from the application layer of the first electronic device (100) indicates one of a data read request and a data write request at the first electronic device (100).

If the data request is not received from the local application layer of the second electronic device (100) then the first electronic device (100) configures "a first lane from a plurality of lanes between the first electronic device (100) and the second electronic device (200) in an active state" and "remaining lanes from the plurality of lanes in a power save mode for regulating power of the first electronic device (100)". The lane can be, for example, but not limited to a wireless communication link, a serial point-to-point link, a transmission line, a copper line, an optical line, and an infrared communication link. A link/lane refers to a connection between the initiator device and the target device. The lane may support one lane. Each lane representing a set of differential signal pairs (one pair for transmission, one pair for reception). To scale bandwidth, the lane may aggregate multiple lanes denoted by xN, where N is any supported lane width, such as 1, 2, 3, 4. Further, the first electronic device (100) transmits one of an AFC and credit information corresponding to the data to the second electronic device (200) using the first link.

In an embodiment, the credit information is used to determine a buffer space available at the peer end. For example if host wants to send data to device, it will use credit information to check how much buffer space is available at device end and send data accordingly.

If the data request is received from an application layer of the first electronic device (100), the first electronic device (100) configures the plurality of lanes between the first electronic device (100) and the second electronic device (200) in an active state to achieve maximum throughput from the first electronic device (100). The first electronic device (100) transmits the data from the first electronic device (100) to the second electronic device (200) using at least one lane from the plurality of links.

In current UFS system, although different speed and power saving states are defined but still in the cases when no traffic is available from the application layer and the target device only needs to send AFC for the received data, which requires very less bandwidth, power is unnecessarily dissipated in multiple lanes. Further, the current UFS system is not flexible in terms of burst open/close dynamically required lanes and keeping other lanes in save state. Consider an example, referring to the FIG. 5, the proposed UFS system (6000) works as follows:
1. When the target device have traffic only from the initiator device, a link layer of the target device will keep lane 0 in active state to send AFC/credit information to the initiator device dynamically switch off all other active lanes in a power saving state or a save state.
2. When the target device have traffic from its own application layer, the link layer of the target device will dynamically switch all available lanes to active state to achieve required throughput.
3. When the initiator device have traffic only from the target device, a link layer of the initiator device will keep lane 0 in active state to send AFC/credit information to the target device and rest of available lanes (expect lane 0) dynamically switch to power saving state to save power.
4. When the initiator device has traffic from its own application layer, the link layer of the initiator device will dynamically switch all available lanes to active state to achieve throughput.
5. Initiator and target device will keep selective lanes in power saving state based on data traffic and not respective to the fast mode or the fast auto dynamic mode.

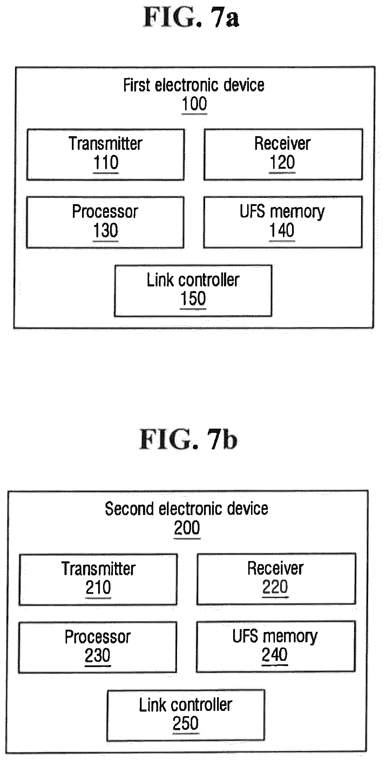

FIG. 7a shows various hardware components of the first electronic device (100), according to an embodiment as disclosed herein. The first electronic device 100 includes a transmitter (110), a receiver (120), a processor (130), a UFS memory (140), and a lane controller (150). The processor (130) is coupled with the transmitter (110), the receiver (120), the UFS memory (140), and the lane controller (150).

The lane controller (150) is configured to detect whether the data request is received from the application layer of the first electronic device (100). If the data request is not received from the application layer of the first electronic device (100) then, the lane controller (150) configures the first lane from the plurality of lanes between the first electronic device (100) and the second electronic device (200) in the active state and remaining lanes from the plurality of lanes in the power save mode for regulating power of the first electronic device (100). Further, the lane controller (150) transmits one of the AFC and credit information corresponding to the data to the second electronic device (200) using the first link.

In an embodiment, the credit information is used to determine a buffer space available at the second device (200). For example if host wants to send data to device, it will use credit information to check how much buffer space is available at device end and send data accordingly.

If the data request is received from the application layer of the first electronic device (100), the lane controller (150) configures the plurality of lanes between the first electronic device (100) and the second electronic device (200) in an active state to achieve maximum throughput from the first electronic device (100). The lane controller (150) transmits the data from the first electronic device (100) to the second electronic device (200) using at least one lane from the plurality of links.

The lane controller (150) is physically implemented by analog or digital circuits such as logic gates, integrated circuits, microprocessors, microcontrollers, memory circuits, passive electronic components, active electronic components, optical components, hardwired circuits, or the like, and may optionally be driven by firmware. The lane controller (150) may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block.

The processor (130) is configured to execute instructions stored in the UFS memory (140) and to perform various processes. The processor (130) may include one or a plurality of processors. The one or the plurality of processors may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The processor (130) may include multiple cores and is configured to execute the instructions stored in the UFS memory (140).

The one or a plurality of processors control the processing of the input data in accordance with a predefined operating rule or artificial intelligence (AI) model stored in the non-volatile memory and the volatile memory. The predefined operating rule or artificial intelligence model is provided through training or learning.

The UFS memory (140) also stores instructions to be executed by the processor (130). The UFS memory (140) stores the status of the link. The UFS memory (140) may include non-volatile storage elements. In addition, the UFS memory (140) may, in some examples, be considered a non-transitory storage medium. The term "non-transitory" may indicate that the storage medium is not embodied in a carrier wave or a propagated signal. However, the term "non-transitory" should not be interpreted that the memory (140) is non-movable. In some examples, the memory (140) can be configured to store larger amounts of information. In certain examples, a non-transitory storage medium may store data that can, over time, change (e.g., in Random Access Memory (RAM) or cache).

The transmitter (110) is configured for communicating internally between internal hardware components and with external devices via one or more networks. The transmitter (110) can be, for example, but not limited to a Bluetooth transmitter, a Wireless fidelity (Wi-Fi) module, and a Li-Fi module. The receiver (120) is configured for communicating internally between internal hardware components and with external devices via one or more networks. The receiver (120) can be, for example, but not limited to a Bluetooth receiver, a Wireless fidelity (Wi-Fi) receiver, and a Li-Fi receiver.

Further, initiator device (100) also comprises memory core, which may include one or more banks, arrays, and/or other organization of the memory cells, e.g., designed using Flash memory technology such as NAND Flash memory cells.

Although the FIG. 6 shows various hardware components of the initiator device (100) but it is to be understood that other embodiments are not limited thereon. In other embodiments, the initiator device (100) may include less or more number of components. Further, the labels or names of the components are used only for illustrative purpose and does not limit the scope of the invention. One or more components can be combined together to perform same or substantially similar function for autonomous detection of the status of the lane between the initiator device (100) and the target device (200) in the UFS system.

FIG. 7b shows various hardware components of the second electronic device (200), according to an embodiment as disclosed herein. The operations and functions of the the second electronic device (200) is similar to the first electronic device (100). For the sake of brevity, the operations and functions of the the second electronic device (200) is not repeated.

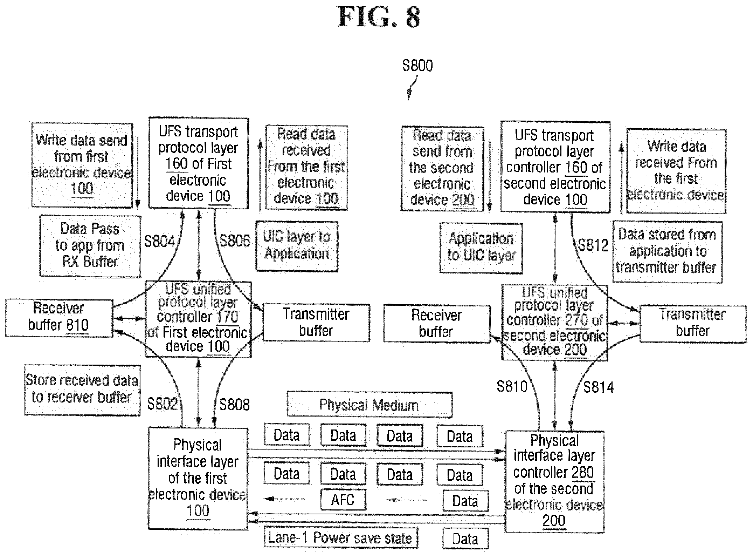

FIG. 8 illustrating layer level data flow (S800) in the UFS system (6000) with a save state switching in selective lanes, when the target device is in the idle mode, according to the embodiments as disclosed herein. At S802, the physical interface layer of the first electronic device (100) receives the data frame from the second electronic device (100), when the first electronic device (100) is in a lane-1 power save state. The physical interface layer of the first electronic device (100) sends the received data frame to a receiver buffer. The receiver buffer stores the received data frame. At S804, the receiver buffer sends the received data to a UFS transport protocol layer of the first electronic device (100). At S806, when traffic is coming from application layer to unipro transmitter buffer, the unipro activating physical layer (MPHY) lanes and sending data. At S808, the UIC layer receives the read data and share the read data with the UFS transport protocol layer. The UFS transport protocol layer writes the data frame send from the first electronic device (100). The UFS transport protocol layer passes the data frame to the application layer, where the data frame is stored in the receiver buffer. The similar operations (S810-S814) are performed in the second electronic device (200). The data received at target device physical layer and passed to target device unipro receiver buffer (S810). From receiver buffer, data is passed to target device application layer (here receiver buffer to target device application arrow is missing). Similarly, data transfer happens in opposite direction also.

As shown in the FIG. 8, the example of data transfer between initiator and target device in proposed idea (consider left as initiator and right as target device in this example). Initially only initiator device has traffic from its application layer while target device has no traffic from its application layer. So in initiator to target device direction, all lanes are kept in active state for maximum throughput while as only AFC is needed in opposite direction, so only lane-0 of target to initiator direction is active for max power savings.

After some time, target device also receives traffic from its application layer, so all lanes are activated in target to initiator device direction also for max throughput.

In this way, power saving is done without compromising throughput.

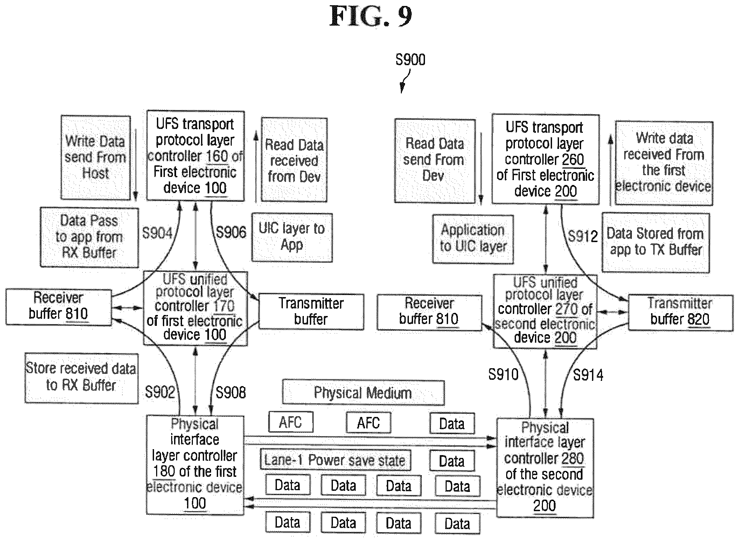

FIG. 9 illustrating layer level data flow (S900) in the UFS system (6000) with the save state switching in selective lanes, when the initiator device is the idle mode, according to the embodiments as disclosed herein. This example is similar to the FIG.8. Here initially both target and initiator device have traffic from their respective application layers, so all lanes are active in both directions. After some time, traffic stops from the initiator's side application layer, so except lane-0, all other lanes in initiator to target device direction switches to save state to save power. All other functionality is similar to the FIG. 8.

At S902, the physical interface layer of the first electronic device (100) receives the data frame from the second electronic device (100). The physical interface layer of the first electronic device (100) sends the received data frame to the receiver buffer (810). The receiver buffer stores the received data frame. At S904, the receiver buffer sends the received data to a UFS transport protocol layer of the first electronic device (100). At S906, when traffic is coming from application layer to unipro transmitter buffer, the unipro activating physical layer (MPHY) lanes and sending data. At S908, the UIC layer receives the read data and share the read data with the UFS transport protocol layer. The UFS transport protocol layer writes the data frame send from the first electronic device (100). The UFS transport protocol layer passes the data frame to the application layer, where the data frame is stored in the receiver buffer. The similar operations (S910-S914) are performed in the second electronic device (200).

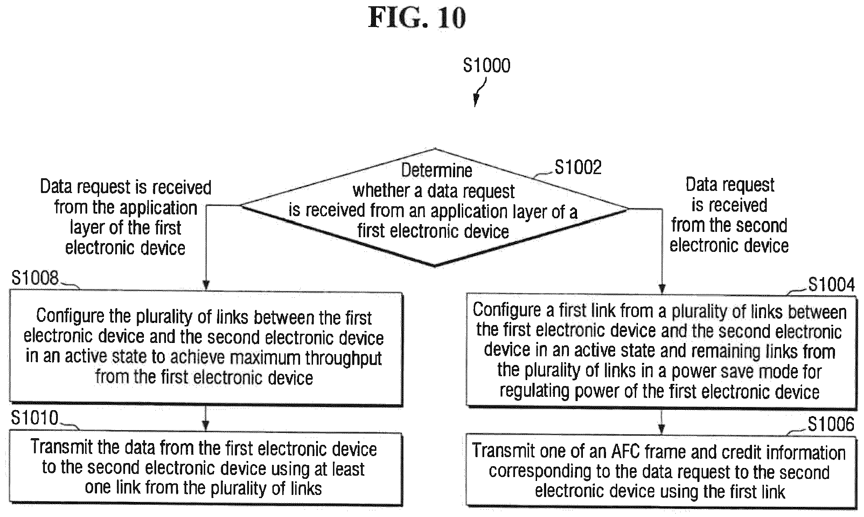

FIG. 10 is a flow chart (51000) illustrating a method for performing save state switching using selective lanes between the first electronic device (100) and the second electronic device (200) in the UFS system (6000), according to the embodiments as disclosed herein. The operations (S1002-S1010) are performed by the lane controller (150) or the lane controller (250).

At S 1002, the method includes determine whether the data request is received from the application layer of the first electronic device (100). If the data request is not received from the application layer of the first electronic device (100) then, at S1004, the method includes configuring the first lane from the plurality of lanes between the first electronic device (100) and the second electronic device (200) in the active state and remaining lanes from the plurality of lanes in the power save mode for regulating power of the first electronic device (100). At S1006, the method includes transmitting one of the AFC frame and credit information corresponding to the data to the second electronic device (100) using the first link.

If the data request is received from the application layer of the first electronic device (100) then, at S1008, the method includes configuring the plurality of lanes between the first electronic device (100) and the second electronic device (200) in an active state to achieve maximum throughput from the first electronic device (100). At S1010, the method includes transmitting the data from the first electronic device (100) to the second electronic device (200) using the lane from the plurality of links.

The various actions, acts, blocks, steps, or the like in the flow diagram (S1000) may be performed in the order presented, in a different order or simultaneously. However, the scope of the invention is determined by the claims.

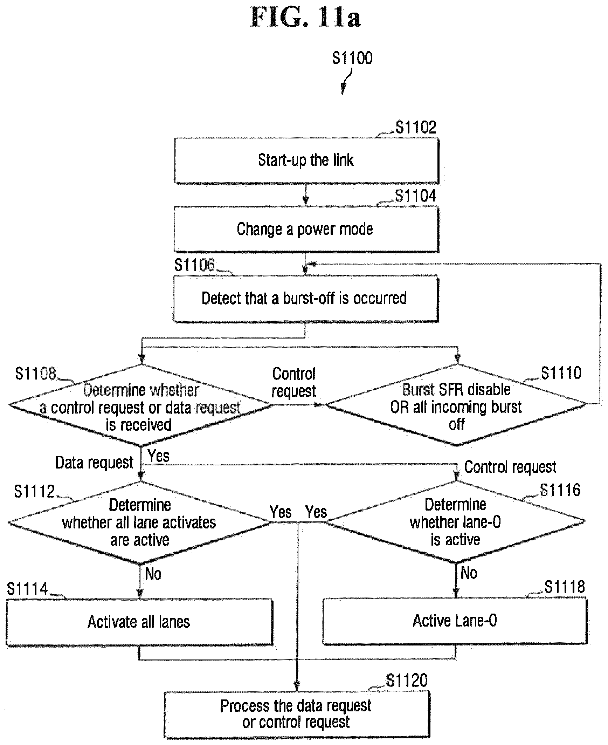

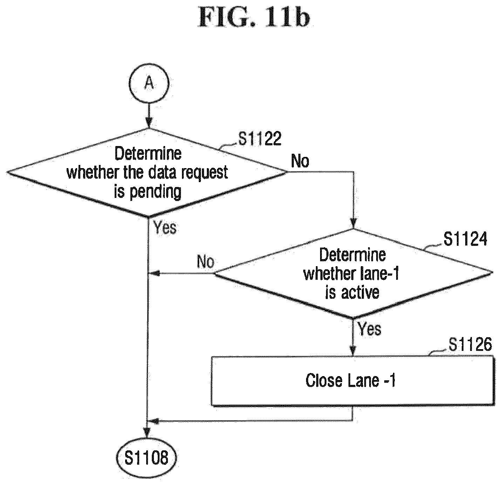

FIG. 11 is an example flow chart (S1100) illustrating various operations for performing save state switching using selective lanes between the first electronic device (100) and the second electronic device (200) in the UFS system (6000), according to the embodiments as disclosed herein. The operations (S1102-S1126) are performed by the lane controller (150) or the lane controller (250). At S1102, the method includes starting-up the lane between the first electronic device (100) and the second electronic device (200).At S1104, the method includes changing a power mode. At S1106, the method includes detect that a burst-off is occurred. At S1108, the method includes determining whether a control request or data read request is received. If the control request is received then, at S1110, the method includes disabling the Burst SFR OR all incoming burst is off. If the data read request is received then, at S1112, the method includes determining whether all lane activates are active. If all lane activates are active then, at S1120, the method includes processing the data read request. If all lane activates are not active then, at S1114, the method includes activate all lanes. If the control request is received then, at S1116, the method includes determining whether lane-0 is active. If lane-0 is active then, at S1120, the method includes processing the control request. If the lane-0 is not active then, at S1118, the method includes activate lane-0. At S1122, the method includes determining whether the data read request is pending. If the data read request is pending then, at S1108, the method includes determining whether the control request or the data read request is received. If the data read request is not pending then, at S1124, the method includes determining whether a lane-1 is active. If the lane-1 is active then, at S1126, the method includes closing the lane-1. If the lane-1 is not active then, at S1108, the method includes determining whether the control request or the data read request is received.

The various actions, acts, blocks, steps, or the like in the flow diagram (S 1100) may be performed in the order presented, in a different order or simultaneously. However, the scope of the invention is determined by the claims.

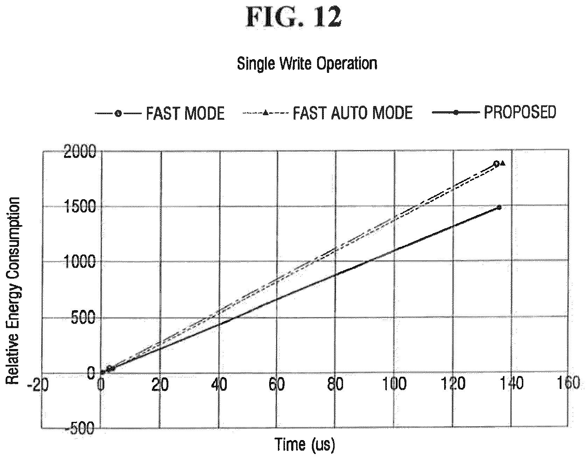

FIG. 12 illustrating energy consumption difference with respect to fast, fast auto mode and proposed scheme for write case, according to the embodiments as disclosed herein. During a single data write request, the initiator device operates in a HSG4 series-A mode, a data frame size of the initiator device is 256KB, and total lanes of the initiator device is 2. Further, below are the energy savings level:
1. With respect to Fast Mode - 21.16%
2. With respect to Fast Auto Mode - 21.10%

Energy consumption comparison of fast mode, fast auto mode and proposed idea for single write operation.
i. Time taken for write operation is nearly same for all 3 modes (marginally higher in case of fast auto mode due to save->burst transition latency)
ii. Energy consumption of fast and fast auto mode is nearly same (since in fast auto mode also, all lanes will be active for data transfer considering group <=7)
iii. Energy consumption of proposed idea is lowest since all lanes are active only in data transfer direction. For AFC, only lane-0 is active while all other lanes are in save state.

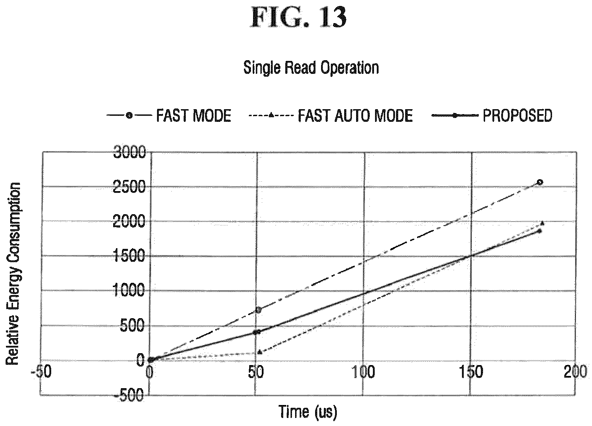

FIG. 13 illustrating energy consumption difference with respect to fast, fast auto mode and proposed scheme for read case, according to the embodiments as disclosed herein. During the single read operation, the initiator device operates in a Gear - HSG4 Series-A mode, a data size of the initiator device is 256KB, total lanes of the initiator device is 2, and a read latency is 50us. Further, below are the energy savings level:
1. With respect to Fast Mode - 27.33%
2. With respect to Fast Auto Mode - 5.09%

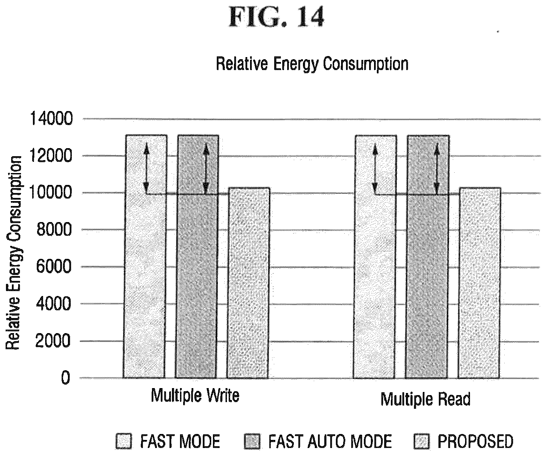

FIG. 14 illustrates multiple read/data write request calculations of UFS system, according to the embodiments as disclosed herein. Consider a proposed multiple read/data write request calculations is having following details (i.e., Gear - HSG4 Series-A, Data Size - 256KB, Outstanding Commands - 72, and Number of Lanes - 2.

Energy consumption comparison of fast mode, fast auto mode and proposed idea for single read operation. The energy consumption of fast mode is highest as all lanes are always active. In fast auto mode, all lanes switches to saves state for the time of read latency, while in proposed model, depending on the traffic available, selective lanes are kept in active state. Overall proposed mode shows the least energy consumption.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A method for performing save state switching in selective lanes between a first electronic device (100) and a second electronic device (200) in an Universal Flash Storage system (5000), wherein the method comprises:
detecting, by the first electronic device (100), whether data request is received from an application layer of the first electronic device (100); and
performing, by the first electronic device (100):
configuring a first lane from a plurality of lanes between the first electronic device (100) and the second electronic device (200) in an active state and remaining lanes from the plurality of lanes in a power save mode for regulating power of the first electronic device (100) in response to determining that the data request is not received from the application layer of the first electronic device (100), and transmitting credit information corresponding to the data to the second electronic device (200) using the first lane, and
configuring the plurality of lanes between the first electronic device (100) and the second electronic device (200) in an active state to achieve maximum throughput from the first electronic device (100) in response to determining that the data request is received from the application layer of the first electronic device (100), and transmitting the data from the first electronic device (100) to the second electronic device (200) using at least one lane from the plurality of lanes.

2. The method as claimed in claim 1, wherein the credit information used to determine a buffer space available at the second device.

3. The method as claimed in claim 1, wherein the data request received from the application layer of the first electronic device (100) indicates one of a data read request and a data write request at the first electronic device (100).

4. The method as claimed in claim 1, wherein the first electronic device (100) is an initiator device and the second electronic device (200) is a target device.

5. The method as claimed in claim 1, wherein the first electronic device (100) is a target device and the second electronic device (200) is an initiator device.

6. An Universal Flash Storage system (5000) for performing save state switching using selective lanes, wherein the Universal Flash Storage system (6000) comprises:
a first electronic device (100); and
a second electronic device (200) communicatively coupled to the first electronic device (100) using a plurality of lanes, wherein the first electronic device (100) comprises:
an Universal Flash Storage memory (140) configured to support one or more power save modes, and
a lane controller (150) configured to:
detect whether data request is received from an application layer of the first electronic device (100); and perform:
configure a first lane from the plurality of lanes between the first electronic device (100) and the second electronic device (200) in an active state and remaining lanes from the plurality of lanes in a power save mode for regulating power of the first electronic device (100) in response to determining that the data request is not received from the application layer of the electronic device (100), and transmitting credit information corresponding to the data to the second electronic device (200) using the first lane, and
configure the plurality of lanes between the first electronic device (100) and the second electronic device (200) in an active state to achieve maximum throughput from the first electronic device (100) in response to determining that the data request is received from the application layer of the first electronic device (100), and transmitting the data from the first electronic device (100) to the second electronic device (200) using at least one lane from the plurality of lanes.

7. The Universal Flash Storage system (6000) as claimed in claim 6, wherein the credit information used to determine a buffer space available at the second device.

8. The Universal Flash Storage system (6000) as claimed in claim 6, wherein the data request received from the application layer of the first electronic device (100) indicates one of a data read request and a data write request at the first electronic device (100).

9. The Universal Flash Storage system (6000) as claimed in claim 6, wherein the first electronic device (100) is an initiator device and the second electronic device (200) is a target device.

10. The Universal Flash Storage system (6000) as claimed in claim 6, wherein the first electronic device (100) is a target device and the second electronic device (200) is an initiator device.

## Patentansprüche

1. Verfahren zum Durchführen einer Speicherzustandsumschaltung in selektiven Spuren zwischen einer ersten elektronischen Vorrichtung (100) und einer zweiten elektronischen Vorrichtung (200) in einem Universal-Flash-Speichersystem (5000), wobei das Verfahren aufweist:
Erfassen, durch die erste elektronische Vorrichtung (100), ob eine Datenanforderung von einer Anwendungsschicht der ersten elektronischen Vorrichtung (100) empfangen wird; und
Durchführen des Folgenden durch die erste elektronische Vorrichtung (100):
Konfigurieren einer ersten Spur aus einer Mehrzahl an Spuren zwischen der ersten elektronischen Vorrichtung (100) und der zweiten elektronischen Vorrichtung (200) in einem Aktivzustand und verbleibender Spuren aus der Mehrzahl an Spuren in einem Stromsparmodus zum Regulieren der Leistung der ersten elektronischen Vorrichtung (100) als Reaktion darauf, dass festgestellt wird, dass die Datenanforderung nicht von der Anwendungsschicht der ersten elektronischen Vorrichtung (100) empfangen wird, und Übertragen von Kreditinformation, die den Daten entspricht, an die zweite elektronische Vorrichtung (200) unter Verwendung der ersten Spur, und
Konfigurieren der Mehrzahl an Spuren zwischen der ersten elektronischen Vorrichtung (100) und der zweiten elektronischen Vorrichtung (200) in einem Aktivzustand, um einen maximalen Durchsatz von der ersten elektronischen Vorrichtung (100) als Reaktion darauf zu erreichen, dass festgestellt wird, dass die Datenanforderung von der Anwendungsschicht der ersten elektronischen Vorrichtung (100) empfangen wird, und Übertragen der Daten von der ersten elektronischen Vorrichtung (100) an die zweite elektronische Vorrichtung (200) unter Verwendung der zumindest einen Spur aus der Mehrzahl an Spuren.

2. Verfahren nach Anspruch 1, wobei die Kreditinformation verwendet wird, um einen Pufferraum zu bestimmen, der an der zweiten Vorrichtung verfügbar ist.

3. Verfahren nach Anspruch 1, wobei die Datenanforderung, die von der Anwendungsschicht der ersten elektronischen Vorrichtung (100) empfangen wird, eines von einer Datenleseanforderung und einer Datenschreibanforderung an der ersten elektronischen Vorrichtung (100) anzeigt.

4. Verfahren nach Anspruch 1, wobei die erste elektronische Vorrichtung (100) eine Initiatorvorrichtung ist und die zweite elektronische Vorrichtung (200) eine Zielvorrichtung ist.

5. Verfahren nach Anspruch 1, wobei die erste elektronische Vorrichtung (100) eine Zielvorrichtung ist und die zweite elektronische Vorrichtung (200) eine Initiatorvorrichtung ist.

6. Universal-Flash-Speichersystem (5000) zum Durchführen einer Speicherzustandsumschaltung unter Verwendung selektiver Spuren, wobei das Universal-Flash-Speichersystem (6000) aufweist:
eine erste elektronische Vorrichtung (100); und
eine zweite elektronische Vorrichtung (200), die unter Verwendung einer Mehrzahl an Spuren kommunikativ mit der ersten elektronischen Vorrichtung (100) verbunden ist, wobei die erste elektronische Vorrichtung (100) aufweist:
einen Universal-Flash-Speicher (140), der dafür ausgelegt ist, einen oder mehrere Stromsparmodi zu unterstützen, und
einen Spurencontroller (150), der dafür ausgelegt ist:
zu erfassen, ob eine Datenanforderung von einer Anwendungsschicht der ersten elektronischen Vorrichtung (100) empfangen wird; und
Folgendes durchzuführen:
Konfigurieren einer ersten Spur aus einer Mehrzahl an Spuren zwischen der ersten elektronischen Vorrichtung (100) und der zweiten elektronischen Vorrichtung (200) in einem Aktivzustand und verbleibender Spuren aus der Mehrzahl an Spuren in einem Stromsparmodus zum Regulieren der Leistung der ersten elektronischen Vorrichtung (100) als Reaktion darauf, dass festgestellt wird, dass die Datenanforderung nicht von der Anwendungsschicht der ersten elektronischen Vorrichtung (100) empfangen wird, und Übertragen von Kreditinformation, die den Daten entspricht, an die zweite elektronische Vorrichtung (200) unter Verwendung der ersten Spur, und
Konfigurieren der Mehrzahl an Spuren zwischen der ersten elektronischen Vorrichtung (100) und der zweiten elektronischen Vorrichtung (200) in einem Aktivzustand, um einen maximalen Durchsatz von der ersten elektronischen Vorrichtung (100) als Reaktion darauf zu erreichen, dass festgestellt wird, dass die Datenanforderung von der Anwendungsschicht der ersten elektronischen Vorrichtung (100) empfangen wird, und Übertragen der Daten von der ersten elektronischen Vorrichtung (100) an die zweite elektronische Vorrichtung (200) unter Verwendung von zumindest einer Spur aus der Mehrzahl an Spuren.

7. Universal-Flash-Speichersystem (6000) nach Anspruch 6, wobei die Kreditinformation verwendet wird, um einen Pufferraum zu bestimmen, der an der zweiten Vorrichtung verfügbar ist.

8. Universal-Flash-Speichersystem (600) nach Anspruch 6, wobei die Datenanforderung, die von der Anwendungsschicht der ersten elektronischen Vorrichtung (100) empfangen wird, eines von einer Datenleseanforderung und einer Datenschreibanforderung an der ersten elektronischen Vorrichtung (100) anzeigt.

9. Universal-Flash-Speichersystem (6000) nach Anspruch 6, wobei die erste elektronische Vorrichtung (100) eine Initiatorvorrichtung ist und die zweite elektronische Vorrichtung (200) eine Zielvorrichtung ist.

10. Universal-Flash-Speichersystem (600) nach Anspruch 6, wobei die erste elektronische Vorrichtung (100) eine Zielvorrichtung ist und die zweite elektronische Vorrichtung (200) eine Initiatorvorrichtung ist.

## Revendications

1. Procédé de réalisation de commutation d'état d'économie dans des voies sélectives entre un premier dispositif électronique (100) et un second dispositif électronique (200) dans un système de stockage flash universel (5000), dans lequel le procédé comprend :
la détection, par le premier dispositif électronique (100), si une demande de données est reçue à partir d'une couche d'application du premier dispositif électronique (100) ; et
la réalisation, par le premier dispositif électronique (100) :
de la configuration d'une première voie parmi une pluralité de voies entre le premier dispositif électronique (100) et le second dispositif électronique (200) dans un état actif et de voies restantes parmi la pluralité de voies dans un mode d'économie d'énergie pour une régulation de puissance du premier dispositif électronique (100) en réponse à la détermination que la demande de données n'est pas reçue à partir de la couche d'application du premier dispositif électronique (100), et la transmission d'informations de crédit correspondant aux données au second dispositif électronique (200) en utilisant la première voie, et
de la configuration de la pluralité de voies entre le premier dispositif électronique (100) et le second dispositif électronique (200) dans un état actif pour atteindre un débit maximal à partir du premier dispositif électronique (100) en réponse à la détermination que la demande de données est reçue à partir de la couche d'application du premier dispositif électronique (100), et la transmission des données du premier dispositif électronique (100) au second dispositif électronique (200) en utilisant au moins une voie parmi la pluralité de voies.

2. Procédé selon la revendication 1, dans lequel les informations de crédit sont utilisées pour déterminer un espace de mémoire tampon disponible au niveau du second dispositif.

3. Procédé selon la revendication 1, dans lequel la demande de données reçue à partir de la couche d'application du premier dispositif électronique (100) indique une parmi une demande de lecture de données et une demande d'écriture de données au niveau du premier dispositif électronique (100).

4. Procédé selon la revendication 1, dans lequel le premier dispositif électronique (100) est un dispositif initiateur et le second dispositif électronique (200) est un dispositif cible.

5. Procédé selon la revendication 1, dans lequel le premier dispositif électronique (100) est un dispositif cible et le second dispositif électronique (200) est un dispositif initiateur.

6. Système de stockage flash universel (5000) pour la réalisation de commutation d'état d'économie en utilisant des voies sélectives, dans lequel le système de stockage flash universel (6000) comprend :
un premier dispositif électronique (100) ; et
un second dispositif électronique (200) couplé de manière communicative au premier dispositif électronique (100) en utilisant une pluralité de voies, dans lequel le premier dispositif électronique (100) comprend :
une mémoire de stockage flash universel (140) configurée pour prendre en charge un ou plusieurs modes d'économie d'énergie, et
un dispositif de commande de voie (150) configuré pour :
détecter si une demande de données est reçue à partir d'une couche d'application du premier dispositif électronique (100) ; et
réaliser :
configurer une première voie parmi la pluralité de voies entre le premier dispositif électronique (100) et le second dispositif électronique (200) dans un état actif et de voies restantes parmi la pluralité de voies dans un mode d'économie d'énergie pour une régulation de puissance du premier dispositif électronique (100) en réponse à la détermination que la demande de données n'est pas reçue à partir de la couche d'application du dispositif électronique (100), et transmettre des informations de crédit correspondant aux données au second dispositif électronique (200) en utilisant la première voie, et
configurer la pluralité de voies entre le premier dispositif électronique (100) et le second dispositif électronique (200) dans un état actif pour atteindre un débit maximal à partir du premier dispositif électronique (100) en réponse à la détermination que la demande de données est reçue à partir de la couche d'application du premier dispositif électronique (100), et transmettre les données du premier dispositif électronique (100) au second dispositif électronique (200) en utilisant au moins une voie parmi la pluralité de voies.

7. Système de stockage flash universel (6000) selon la revendication 6, dans lequel les informations de crédit sont utilisées pour déterminer un espace de mémoire tampon disponible au niveau du second dispositif.

8. Système de stockage flash universel (6000) selon la revendication 6, dans lequel la demande de données reçue à partir de la couche d'application du premier dispositif électronique (100) indique une parmi une demande de lecture de données et une demande d'écriture de données au niveau du premier dispositif électronique (100).

9. Système de stockage flash universel (6000) selon la revendication 6, dans lequel le premier dispositif électronique (100) est un dispositif initiateur et le second dispositif électronique (200) est un dispositif cible.

10. Système de stockage flash universel (6000) selon la revendication 6, dans lequel le premier dispositif électronique (100) est un dispositif cible et le second dispositif électronique (200) est un dispositif initiateur.
